# EUROPÄISCHE PATENTANMELDUNG

(11) **EP 4 650 637 A1**
(43) Veröffentlichungstag der Anmeldung: **19.11.2025**
(21) Anmeldenummer: 24176583.3
(22) Anmeldetag: 17.05.2024
(51) Int. Cl.: F16L 1/024, F16L 1/06, F16L 3/10, F16L 3/26, F16L 57/00, F16L 57/02, H02G 1/00, H02G 3/32, H02G 9/02

(54) **SCHLAUCHBRÜCKE**

(71) Anmelder: Walter, Bruno, 6713 Ludesch (AT)
(72) Erfinder: Walter, Bruno, 6713 Ludesch (AT)
(74) Vertreter: Riebling, Peter

(57) **Zusammenfassung**

Schlauchbrücke (1) für einen Schlauch (11) oder ein Kabel, bestehend aus einem Oberteil (2) und einem Unterteil (3), welche lösbar miteinander verbindbar sind und zwischen sich einen Kanal (11) für den Schlauch (11) oder das Kabel ausbilden, dadurch gekennzeichnet, dass die Ober- und Unterteile (2, 3) der Schlauchbrücke (1) mit einer formschlüssigen Verbindung verbindbar sind, bei welcher gegenüberliegende Zähne (8, 8a, 8b) formschlüssig ineinandergreifen.

## Beschreibung

Die Erfindung betrifft eine Schlauchbrücke nach dem Oberbegriff des Patentanspruches 1 und des Patentanspruches 3.

Schlauchbrücken werden von Feuerwehren oder Technischen Hilfswerken eingesetzt. Eine Schlauchbrücke ist immer dann notwendig, wenn ein Schlauch oder ein (elektrisches) Kabel von einer entfernten Entnahmestelle zu einer Einsatzstelle über eine Straße verlegt werden muss. Hierbei sollte es möglich sein, dass die Fahrzeuge den Schlauch oder das Kabel überqueren können, ohne dass der Schlauch oder das Kabel beschädigt werden.

Die Schlauchbrücken sollten auf der einen Seite keine zu hohe Bauhöhe aufweisen, damit die Fahrzeuge ohne Beschädigungen über die Brücke fahren können. Auf der anderen Seite sollte der Schlauch durch die Schlauchbrücke nicht zu stark zusammengedrückt werden, um den Druckverlust zu vermeiden. Bei den Schläuchen handelt es sich beispielsweise um sogenannte B- oder C-Druckschläuche, aber auch um größere Schläuche mit einem Durchmesser von mehr als 100mm.

Aus dem Stand der Technik sind bereits Schlauchbrücken in verschiedenen Ausführungen aus Metall, Kunststoff oder Holz bekannt. Beispielsweise werden bei einer Holzschlauchbrücke fünf Kanthölzern eingesetzt, die durch zwei Gurtbänder miteinander verbunden sind. Zwischen dem 2. und 3.Kantholz ist ein erster Abstand für einen ersten Druckschlauch und zwischen dem 3. und 4.Kantholz ist ein zweiter Abstand für einen zweiten Druckschlauch. Die vorliegende Holzschlauchbrücke ist jedoch nur für B- oder C-Druckschläuche geeignet, da diese einen Durchmesser von circa 75mm aufweisen und somit die Kanthölzer eine Höhe aufweisen, welche von einem Fahrzeug noch überfahrbar ist.

Bei großen Schlauchdurchmessern werden sogenannte Quetschbrücken mit einem ovalen Schacht eingesetzt, welche den Schlauch zusammenquetschen. So wird beispielsweise die Höhe des Schlauchs im Bereich des Brückenabschnitts auf circa 90mm reduziert, während der verbleibende Schlauch auf eine Breite von circa 200mm verdrängt wird.

Mit der EP 0 917 889 A1 wird eine Schlauchbrücke zur Überbrückung eines über eine Fläche verlaufenden Schlauches offenbart. Die Schlauchbrücke besteht aus einem zweiteiligen Brückenabschnitt, welcher mit vier Schraubverbindungen miteinander verbindbar ist. Im geschlossenen Zustand ist zwischen den Brückenabschnitten ein Kanal für den Schlauch vorhanden, wobei die Abmessung des Kanals so gewählt ist, dass der Querschnitt des Schlauchs im Bereich des Brückenabschnitts verringert ist.

Die Schlauchbrücke, bei welchen die Höhe des Schlauches im Brückenabschnitt verringert wird, sind mit dem Nachteil verbunden, dass dies nur für Drücke von circa 5 bar geeignet sind. Bei höheren Drücken wird aufgrund der eingesetzten Verbindungsmittel der komplette Brückenabschnitt verbogen. Eine Verstärkung in diesem Bereich ist nicht möglich, da dann die geforderte Überfahrtshöhe von circa 100mm überschritten wird.

Der Erfindung liegt deshalb die Aufgabe zugrunde, eine Schlauchbrücke bereitzustellen, welche eine sichere und feste Verbindung gegenüber hohen Druckkräften aufweist.

Zur Lösung der gestellten Aufgabe ist die Erfindung durch die technische Lehre des Anspruches 1 und des Anspruches 3 gekennzeichnet.

Wesentliches Merkmal der Erfindung ist, dass die Schlauchbrücke ein Ober- und ein Unterteil aufweist, wobei die Ober- und Unterteile mit einer formschlüssigen Verbindung verbindbar sind, bei welcher gegenüberliegende Zähne formschlüssig ineinandergreifen.

Durch die ineinandergreifenden Zähne wird eine feste, aber lösbare Verbindung zwischen dem Ober- und Unterteil der Schlauchbrücke erreicht. Dadurch kann eine stabile und kostengünstige Schlauchbrücke hergestellt werden, welche gleichzeitig extremsten Belastungen, insbesondere hohen Druckkräften standhält.

Unter einer Schlauchbrücke wird generell eine Querungshilfe verstanden, welche das Verlegen von Schläuchen (oder Kabeln) über Straßen und Wege ermöglicht, ohne dass diese für den Verkehr gesperrt werden müssen. Die Schlauchbrücke ist hierbei geeignet zur Aufnahme von Schläuchen (und Kabeln) und dient gleichzeitig als Überfahrhilfe bzw. Querungshilfe. Sollte der Schlauch einen größeren Durchmesser als der innenliegende Kanal der Schlauchbrücke aufweisen, so wird die Höhe des Schlauchs im Bereich der Schlauchbrücke durch den vollumfänglich geschlossenen Kanal reduziert, ohne das Druckverluste auftreten.

Bei einer ersten bevorzugten Ausführungsform weist die Schlauchbrücke ein Oberteil und ein Unterteil auf. Das Oberteil besteht aus einer Platte mit abstehenden Zähnen, welche jeweils in zwei beabstandeten Reihen angeordnet sind und zusammen eine U-Form ausbilden. Die in Reihe angeordneten Zähne bilden somit die beiden Seitenflächen des Oberteils. Das Unterteil besteht ebenfalls aus einer Platte mit abstehenden Zähnen, welche jeweils in zwei beabstandeten Reihen angeordnet sind und zusammen eine U-Form ausbilden. Die in Reihe angeordneten Zähne bilden die beiden Seitenflächen des Unterteils. Zur formschlüssigen Verbindung greifen die Zähne des Oberteils in die gegenüberliegenden Zähne des Unterteils ein.

Es findet ein Verhaken der gegenüberliegenden Zähne statt, was eine besondere feste Verbindung des Oberteils mit dem Unterteil darstellt.

Bei einer zweiten bevorzugten Ausführungsform besteht die formschlüssige Verbindung aus Zähnen und Schlitzen. Das Oberteil besteht aus einer Platte mit abstehenden Zähnen und Schlitzen, welche jeweils in zwei beabstandeten Reihen angeordnet sind und zusammen mit der Platte eine U-Form ausbilden. Das Unterteil besteht ebenfalls aus einer Platte mit abstehenden Zähnen und Schlitzen, welche jeweils in zwei beabstandeten Reihen angeordnet sind und zusammen mit der Platte eine U-Form ausbilden. Zur Verbindung greifen die Zähne des Oberteils formschlüssig in die gegenüberliegenden Schlitze des Unterteils ein und die Zähne des Unterteils greifen formschlüssig in die gegenüberliegenden Schlitze des Oberteils ein.

Bei den Schlitzen handelt es sich vorzugsweise um Rücksprünge, welche sich unterhalb des hakenförmigen Zahns befinden. Die Form des Zahns ist so ausgebildet, dass dieser formschlüssig in den gegenüberliegenden Schlitz eingreift. Dadurch wird eine äußerst feste und sichere Verbindung zwischen dem Ober- und Unterteil erreicht, welche den hohen Druckkräften des innenliegenden, im Kanal befindlichen Schlauchs standhalten.

Bei einer dritten bevorzugten Ausführungsform besteht ein erster Teil (Oberteil oder Unterteil) aus einer Platte mit abstehenden Zähnen, welche jeweils in zwei beabstandeten Reihen angeordnet sind und zusammen mit der Platte eine U-Form ausbilden. Der zweite Teil (Oberteil oder Unterteil) besteht aus einer Platte mit Schlitzen, welche jeweils in zwei beabstandeten Reihen angeordnet sind. Zur formschlüssigen Verbindung greifen die Zähne des ersten Teils in die Schlitze des zweiten Teils ein.

Durch die U-Form des Oberteils und die U-Form des Unterteils bildet sich im geschlossenen Zustand der Schlauchbrücke ein Kanal für den Schlauch. Vorzugsweise ist die Höhe des Kanals niedriger als die Höhe des unter Druck stehenden Schlauchs. Beim Verlegen des Schlauchs wird dieser zunächst drucklos zwischen die beiden beabstandeten, abstehenden Zähne des Unterteils gelegt. Danach wird das Oberteil gegenüber dem Unterteil positioniert und die beiden Teile formschlüssig miteinander verbunden. Der Schlauch kann nun mit Wasser gefüllt werden, wobei durch den Wasserdruck sich der Schlauch aufweitet und seine maximale Höhe erreicht. Da teilweise der Schlauch durch die Schlauchbrücke verlegt ist und die Höhe des Kanals in der Schlauchbrücke niedriger ist, als die allgemeine Höhe des Schlauchs, entstehen hohe Kräfte zwischen dem Ober- und Unterteil der Schlauchbrücke. Durch die formschlüssige Verbindung wird jedoch eine hochfeste und stabile Verbindung zwischen dem Ober- und Unterteil erreicht, welche den hohen Druckkräften des gequetschten Schlauches im Bereich der Schlauchbrücke standhält.

Die formschlüssige Verbindung zwischen dem Ober- und dem Unterteil ist als Verzahnung ausgebildet. Die Zähne können hierbei jede beliebige Form aufweisen. Der Zahn kann beispielsweise eine hakenförmige Form, eine L-Form, eine Keilform, Zinken-Form, Fanghaken-Form oder dergleichen aufweisen. Entscheidend ist, dass die Form des Zahns an die Form des gegenüberliegenden Schlitzes angepasst ist.

Des Weiteren bestimmte die Höhe des Zahns, d.h. der Abstand zwischen der Platte und der Zahnspitze, die Höhe des Kanals. Insbesondere im geschlossenen, verriegelten Zustand des Oberteils mit dem Unterteil ist die Höhe des Zahns entscheidend für die Höhe des Kanals - je höher der Zahn ausgebildet ist, um so höher ist der Kanal ausgebildet.

Um das Oberteil mit dem Unterteil zu verbinden, werden die beiden Teile in eine gegenüberliegende Position gebracht, wobei die abstehenden Zähne des ersten Teils bereits auf der gegenüberliegenden Seitenfläche des zweiten Teils aufliegen. Durch eine Bewegung in Längsrichtung der Schlauchbrücke werden die Zähne in die Schlitze eingeschoben und greifen dort formschlüssig ein.

Durch eine Bewegung in entgegengesetzter Richtung wird die formschlüssige Verbindung wieder aufgelöst und das Oberteil kann von dem Unterteil getrennt werden.

Die Verbindunglösung mit den Zähnen, welche zwischen dem Ober- und dem Unterteil einhaken, hat sich als besonders vorteilhaft herausgestellt, insbesondere wenn die Druckkräfte des Schlauchs innerhalb des Kanals in vertikaler Richtung wirken. Durch die Anordnung der Zähne in einer Reihe über die gesamte Längserstreckung des Ober- und/oder Unterteils und die Anordnung der Zähne auf beiden Seiten des Ober- und Unterteils werden die entstehenden Druckkräfte des Schlauchs gleichmäßig von den beiden Bauteilen aufgenommen.

Bei einer bevorzugten Ausführungsform besteht die Schlauchbrücke aus einem Stahl, vorzugsweise aus Hardox. Bei Hardox handelt es sich um einen verschleißfesten und abriebfesten Stahl, welcher eine hohe Festigkeit mit Härte und Zähigkeit verbinden.

Bei einer weiteren bevorzugten Ausführungsform ist das Oberteil kürzer als das Unterteil ausgebildet. Optional weisen die beiden Teile hierfür jeweils abgeschrägte Stirnseiten auf. Durch das verkürzte Oberteil dehnt sich der gequetschte Schlauch außerhalb des Kanals beim Rückverformen zuerst nach oben und erst mit einem Längsabstand in alle Richtungen aus. Dies hat sich als besonders vorteilshaft herausgestellt, da dadurch das gesamte Brückenteil an den Boden gedrückt wird.

Der Erfindungsgegenstand der vorliegenden Erfindung ergibt sich nicht nur aus dem Gegenstand der einzelnen Patentansprüche, sondern auch aus der Kombination der einzelnen Patentansprüche untereinander.

Alle in den Unterlagen, einschließlich der Zusammenfassung offenbarten Angaben und Merkmale, insbesondere die in den Zeichnungen dargestellte räumliche Ausbildung, werden als erfindungswesentlich beansprucht, soweit sie einzeln oder in Kombination gegenüber dem Stand der Technik neu sind.

Im Folgenden wird die Erfindung anhand von lediglich einen Ausführungsweg darstellenden Zeichnungen näher erläutert. Hierbei gehen aus den Zeichnungen und ihrer Beschreibung weitere erfindungswesentliche Merkmale und Vorteile der Erfindung hervor.

Es zeigen:
- Figur 1:: Seitenansicht der Schlauchbrücke im geöffneten Zustand
- Figur 2:: perspektivische Ansicht der Schlauchbrücke im geöffneten Zustand
- Figur 3a,3b:: Seitenansicht und Draufsicht des Unterteils der Schlauchbrücke
- Figur 4a, 4b:: Seitenansicht und Draufsicht des Oberteils der Schlauchbrücke
- Figur 5:: Seitenansicht der Schlauchbrücke im verbundenen Zustand
- Figur 6:: perspektivische Ansicht der Schlauchbrücke im verbundenen Zustand
- Figur 7:: Seitenansicht der Schlauchbrücke im verriegelten Zustand
- Figur 8:: Darstellung des Verriegelungsbolzens
- Figur 9:: Seitenansicht der Verschiebesicherung im Detail
- Figur 10:: perspektivische Darstellung der Schlauchbrücke im verriegelten Zustand mit Verschiebesicherung
- Figur 11:: perspektivische Darstellung der Verschiebesicherung
- Figur 12:: Draufsicht auf die Schlauchbrücke
- Figur 13:: Schnittdarstellung durch die Schlauchbrücke mit Schlauch
- Figur 14:: seitliche Schnittdarstellung durch die Schlauchbrücke mit Schlauch
- Figur 15:: perspektivische Darstellung zweier Keile für die Schlauchbrücke
- Figur 16:: perspektivische Darstellung zweier Schlauchbrücken mit Keilen
- Figur 17:: Draufsicht auf drei Schlauchbrücken mit innenliegendem Schlauch
- Figur 18:: Seitenansicht von drei Schlauchbrücken mit innenliegendem Schlauch
- Figur 19:: schematische Draufsicht auf drei Schlauchbrücken mit Schlauch mit Schnitt D-D
- Figur 20:: Darstellung des Schnitts D-D im Detail
- Figur 21:: schematische Darstellung eines Fahrzeugs mit Schlauchbrücke

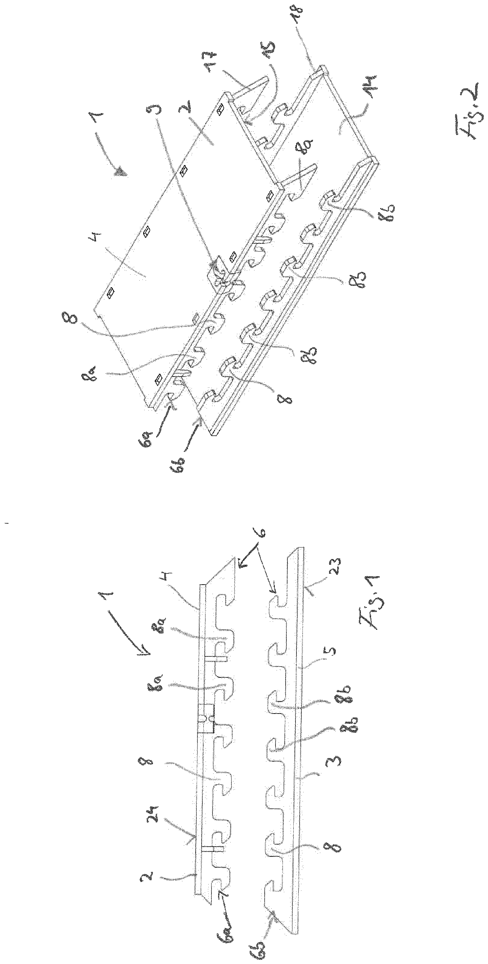

Mit der Figur 1 wird die erfindungsgemäße Schlauchbrücke 1 gezeigt, welche aus einem Oberteil 2 und einem Unterteil 3 besteht. Beide Teile 2, 3 weisen eine seitliche Verzahnung 6, 6a, 6b auf.

Das Oberteil 2 besteht aus einer Platte 4 mit abstehenden Verzahnungen 6a, welche in beabstandeten Reihen angeordneten sind und die Seitenflächen bilden. Das Oberteil 2 und die beiden abstehenden Verzahnungen 6a bilden zusammen eine U-Form aus. Das Unterteil 3 besteht ebenfalls aus einer Platte 5 mit abstehenden Verzahnungen 6b, welche in beabstandeten Reihen angeordneten sind und die Seitenflächen bilden. Auch das Unterteil 3 und die beiden abstehenden Verzahnungen 6b bilden eine U-Form aus.

Das plattenförmige Unterteil 3 liegt mit der Auflagefläche 23 auf dem Boden auf, wobei das Unterteil 3 länger als das Oberteil 2 ausgebildet ist.

Die Verzahnungen 6, 6a, 6b bestehen aus Zähnen 8, 8a, 8b, welche entlang der Längsachse der Platten 4, 5 in Reihen angeordnet sind. Gemäß der Figur 1 sind die Zähne 8, 8a, 8b hakenförmig ausgebildet. Im zusammengesetzten Zustand des Ober- und Unterteils 2, 3 greift jeweils ein Zahn 8a des Oberteils 2 in einen hierfür vorgesehenen, gegenüberliegenden Zahn 8b des Unterteils 3 ein und ein Zahn 8b des Unterteils 3 in den hierfür vorgesehenen, gegenüberliegenden Zahn 8a des Oberteils 2.

Figur 2 zeigt die Schlauchbrücke 1 im geöffneten Zustand. Das Oberteil 2 ist beabstandet von dem Unterteil 3, so dass die Zähne 8, 8a, 8b nicht im Eingriff sind.

Die hakenförmigen Zähne 8, 8a, 8b erstrecken sich auf beiden Seiten der Platten 4, 5 über die gesamte Länge des Ober- und Unterteils 2, 3. Die Verzahnung 6, 6a, 6b ist an den Stirnenden 17, 18 jeweils abgeschrägt.

Im zusammengesetzten Zustand bildet sich zwischen dem Oberteil 2 und dem Unterteil 3 ein Kanal 11 für den Schlauch 16. Das Unterteil 3 weist hierfür eine Auflagefläche 14 für den Schlauch 16 und das Oberteil 2 weist eine Auflagefläche 15 für den Schlauch 16 auf.

Das Oberteil 2 weist zusätzlich eine Verschiebesicherung 9 auf, welche im zusammengesetzten Zustand ein Verschiebebewegung zwischen dem Ober- und Unterteil 2, 3 verhindert.

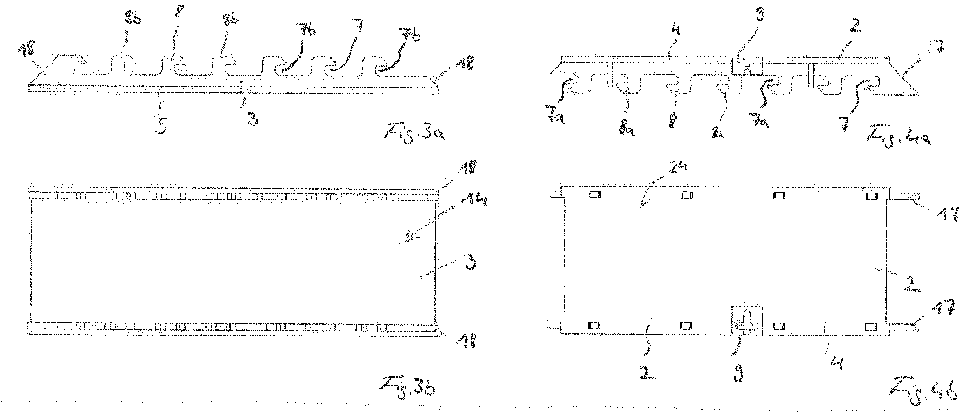

Figur 3a zeigt das Unterteil 3 mit einer Seitenansicht gemäß der zweiten, bevorzugten Ausführungsform. Ausgehend von der Platte 5 stehen die hakenförmigen Zähne 8, 8b an den seitlichen Rändern ab. Jeder Zahn 8, 8b weist zusätzlich einen Schlitz 7, 7b auf. Die Stirnenden 18 sind abgeschrägt.

Figur 3b zeigt das Unterteil 3 in einer Draufsicht, wobei die Auflagefläche 14 für den Schlauch 16 erkennbar ist.

Figur 4a zeigt das Oberteil 2 mit einer Seitenansicht gemäß der zweiten, bevorzugten Ausführungsform. Ausgehend von der Platte 4 stehen die hakenförmigen Zähne 8, 8a an den seitlichen Rändern ab. Jeder Zahn 8, 8a weist zusätzlich einen Schlitz 7, 7a auf. Die Stirnenden 17 sind abgeschrägt.

Figur 4b zeigt das Unterteil 3 in einer Draufsicht, wobei mit der Überfahrfläche 24 für ein Fahrzeug erkennbar ist.

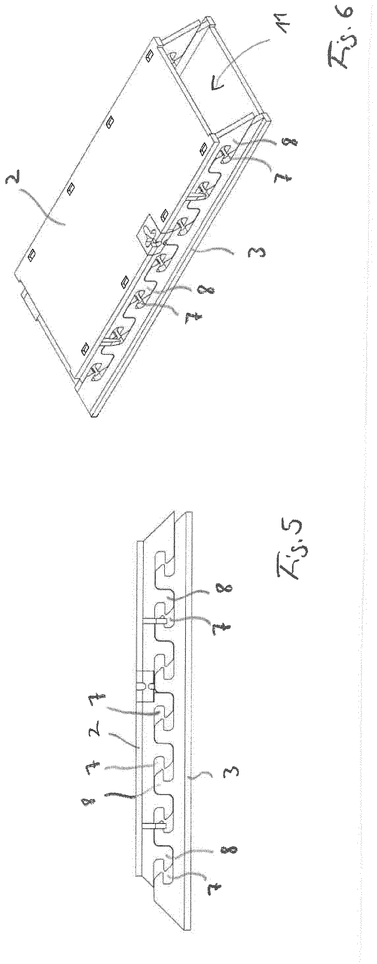

Gemäß den Figuren 5 und 6 wird die Schlauchbrücke 1 mit verbundenen Ober- und Unterteil 2, 3 gezeigt. Die Zähne 8, 8a, 8b sind zwar bereits in Kontakt mit der gegenüberliegenden Platte 4, 5, jedoch noch nicht im Eingriff mit den jeweiligen Schlitzen 7, 7a, 7b. Erst durch eine Verschiebebewegung in Längsrichtung greifen die hakenförmigen Zähne 8, 8a, 8b ineinander ein.

Anhand der Figur 6 lässt sich der Kanal 11 für den Schlauch 16 erkennen. Der Kanal 11 wird aufgrund der beiden U-förmigen Ober- und Unterteile 3, 4 gebildet.

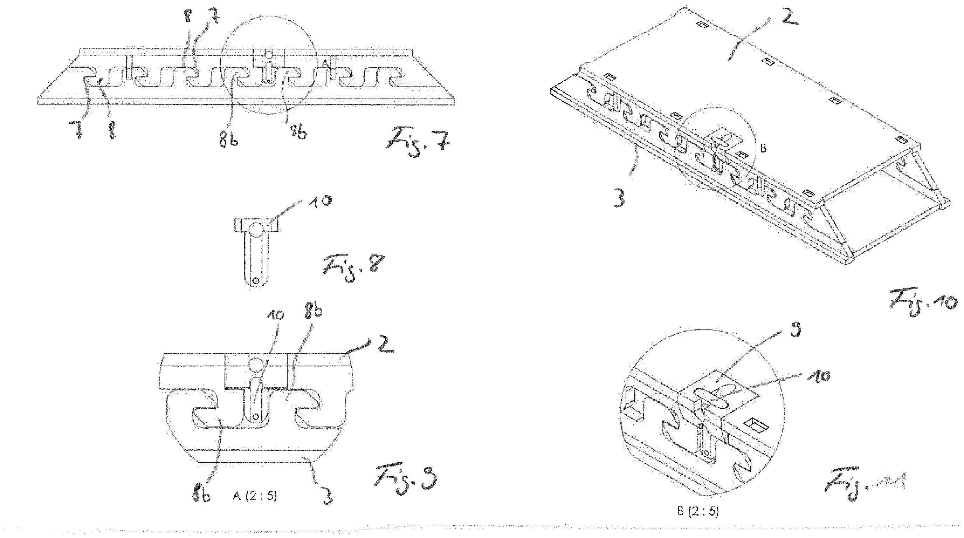

Die Figuren 7, 8, 9, 10 und 11 zeigen die Verschiebesicherung 9 der Schlauchbrücke 1. Um das Oberteil 2 mit dem Unterteil 3 fest miteinander zu verbinden, werden die beiden Teile 2, 3 gegeneinander verschoben, wodurch die Zähne 8, 8a, 8b in Eingriff mit den Schlitzen 7, 7a, 7b gelangen. Damit die beiden Teile 2, 3 sich nicht unbeabsichtigt wieder verschieben, weist die Schlauchbrücke 1 eine Verschiebesicherung 9 auf.

Figur 7 zeigt die verriegelten Ober- und Unterteile 2, 3 in einer Seitenansicht. Die Verschiebesicherung 9 ist an dem Oberteil 2 angeordnet und greift mit dem Verriegelungsbolzen 10 zwischen zwei Zähne 8b des Unterteils. Dadurch wird ein Verschieben des Oberteils 2 gegenüber dem Unterteil 3 verhindert.

Figur 8 zeigt den Verriegelungsbolzen 10 der Verschiebesicherung 9 im Detail. Der Verriegelungsbolzen 10 ist T-förmig ausgebildet.

Figur 9 zeigt die Verschiebesicherung 9 im Detail, wobei der Verriegelungsbolzen 10 zwischen zwei beabstandete Zähne 8, 8b eingreift und dadurch ein Verschieben verhindert. Die Zähne 8, 8a, 8b sind im Eingriff in den Schlitzen 7, 7a, 7b, so dass eine formschlüssige Verbindung zwischen dem Ober- und Unterteil 2, 3 besteht.

Die Figuren 10 und 11 zeigen die Verschiebesicherung 9 nochmals mit einer perspektivischen Ansicht.

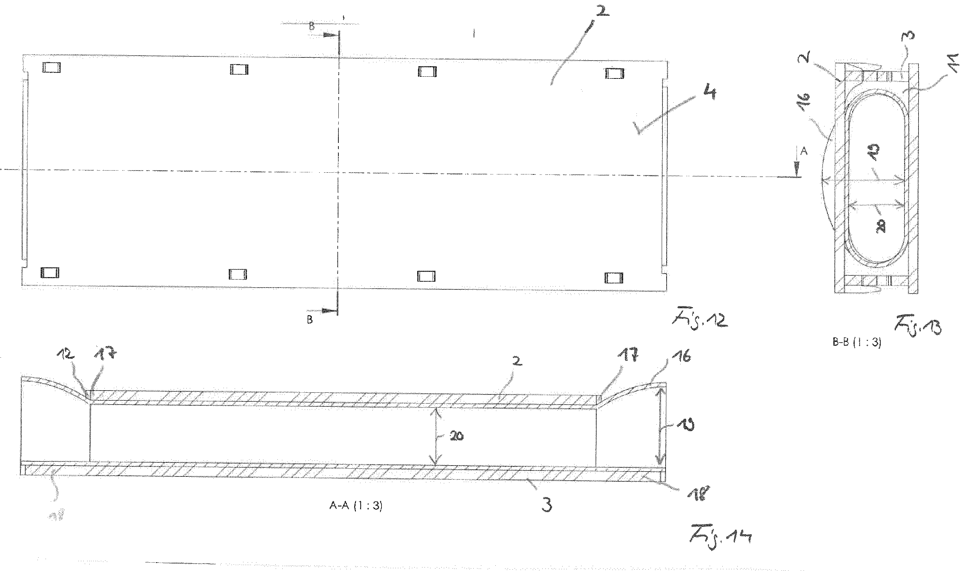

Mit der Figur 12 wird die Schlauchbrücke 1 in einer Draufsicht gezeigt, wobei die Verläufe der Schnitte A-A und B-B dargestellt sind.

Figur 13 zeigt den Schnitt B-B der Schlauchbrücke 1. Zwischen dem Oberteil 2 und dem Unterteil 3 ist der Kanal 11, in welchem sich der Schlauch 16 befindet. Die Höhe des Kanals 11 ist geringer als die Höhe des Schlauchs 16, so dass der Schlauch 16 im Kanal 11 zusammengedrückt bzw. gequetscht wird.

Anhand der Figur 13 ist erkennbar, dass der Kanal 11 die Höhe des Schlauchs 16 verringert, wodurch der Schlauch 16 eine ovale Form erhält und zu beiden Seiten im Kanal 11 verdrängt wird. Die Größe bzw. die Breite des Kanals 11 ist so gewählt, dass der Schlauch 11 nicht die beiden Seitenflächen bzw. die Verzahnungen 6 des Oberteils 2 und den Unterteils 3 berührt. Mit der Höhe 19 wird die normale Höhe des Schlauchs 16 symbolisch dargestellt. Bei der Höhe 20 handelt es sich um die reduzierte Höhe des Schlauchs 16 im Kanal 11.

Figur 14 zeigt den Schnitt A-A der Schlauchbrücke 1. In der Schlauchbrücke 1 befindet sich im Kanal 11 zwischen dem Ober- und Unterteil 2, 3 der Schlauch 16. Die Höhe des Schlauchs 16 ist im Kanal 11 gegenüber der originalen Höhe verringert. Außerhalb des Kanals 11 weist der Schlauch 16 somit eine größere Höhe auf.

Anhand der Figur 14 ist erkennbar, dass sich die Längen des Ober- und Unterteils 2, 3 unterscheiden. Das Unterteil 3 ist länger als das Oberteil 2. Dies hat sich als besonders Vorteilhaft erwiesen. Der Schlauch 16 dehnt sich aufgrund der kürzeren Oberseite zuerst nach oben hin aus, wodurch die gesamte Schlauchbrücke 1 auf den Boden gedrückt wird.

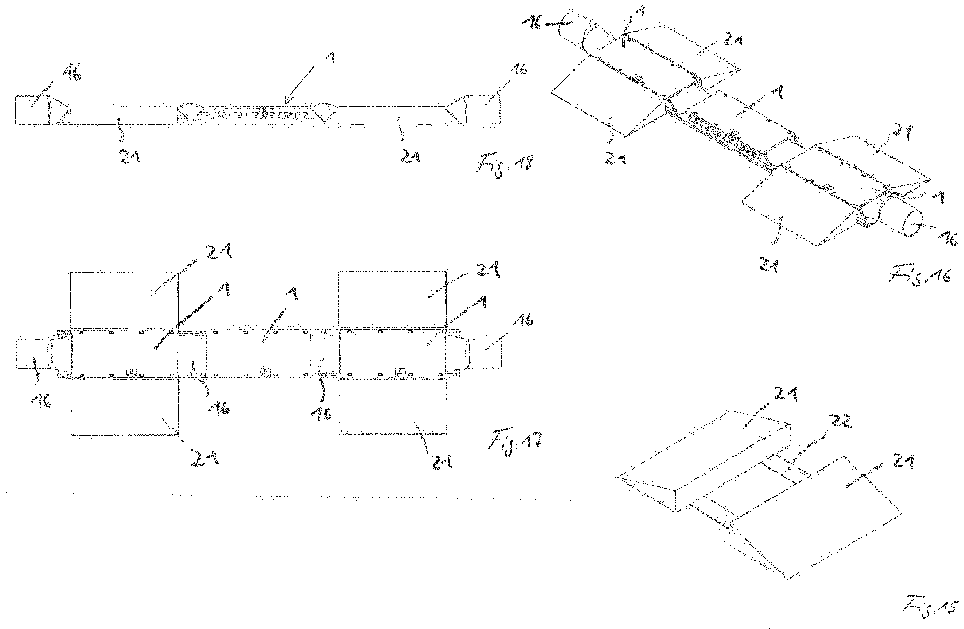

Figur 15 zeigt zwei beabstandete Keil 21, welche mit einem Gurt 22 oder Gurtband miteinander verbunden sind. Zwischen die beiden Keile 21 wird die erfindungsgemäße Schlauchbrücke 1 gelegt, so dass die Fahrzeuge einfach über die Schlauchbrücke 1 fahren können.

Die Figuren 16, 17 und 18 zeigen einen Schlauch 16 mit insgesamt drei, nebeneinander angeordneten Schlauchbrücken 1. Die beiden äußeren Schlauchbrücken 1 sind im Abstand von einer gängigen Spurbreite eines Fahrzeugs anordnet und weisen jeweils Keile 21 für die Überfahrt auf. Zwischen den beiden äußeren Schlauchbrücken 1 befindet sich noch eine mittige Schlauchbrücke 1.

Anhand der Figur 18 ist erkennbar, dass die Höhe des Schlauchs 16 durch die Schlauchbrücken 1 reduziert wird, wobei in den Übergängen zwischen den Schlauchbrücken 1 der Schlauch 16 seine originale Höhe aufweist.

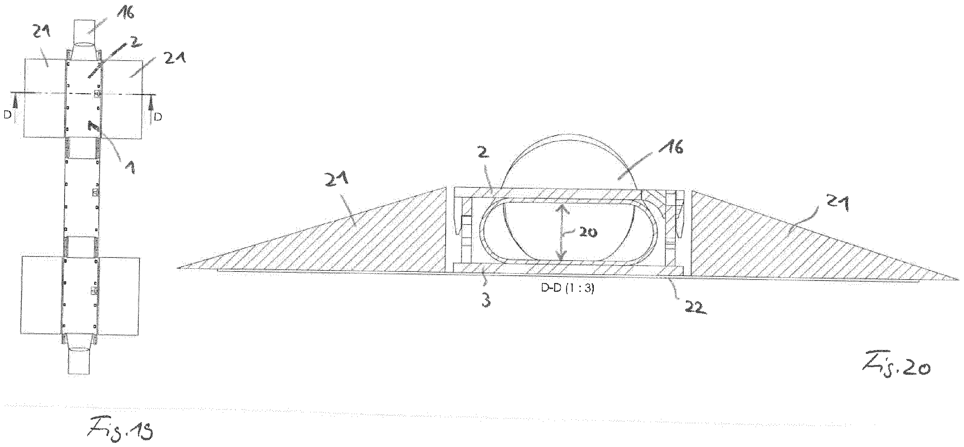

Figur 19 zeigt die Schlauchbrücke 1 mit dem Schnitt D-D, welcher sich quer durch die Schlauchbrücke 1 erstreckt.

Figur 20 zeigt den Schnitt D-D. An den Seiten der Schlauchbrücke 1 befinden sich jeweils ein Keil 21, welche durch den Gurt 22 miteinander verbunden sind. Der Schlauch 16 befindet sich im Kanal 16 mit einer reduzierten Höhe 20. Außerhalb des Kanals 11 weist der Schlauch 16 eine Höhe 19 auf.

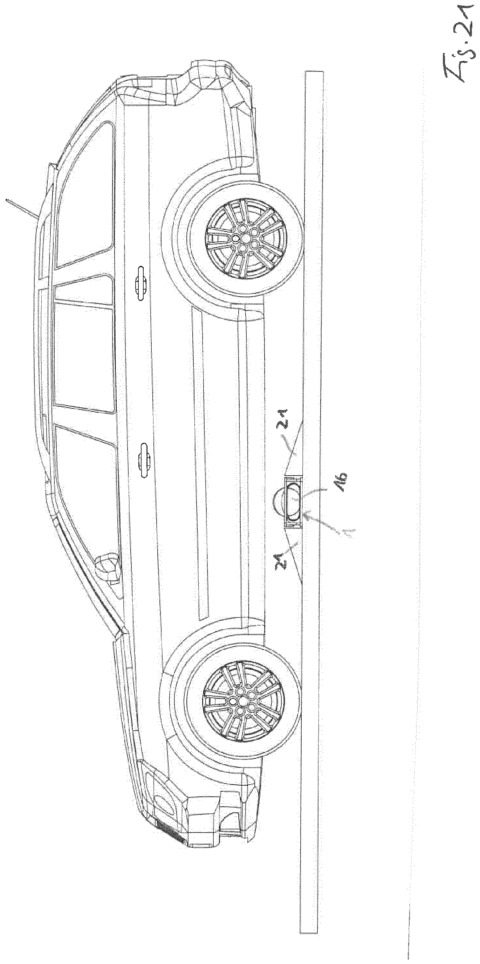

Mit der Figur 21 wird ein Fahrzeug gezeigt, welches über eine Schlauchbrücke 1 fährt. Die Höhe der Schlauchbrücke 1 ist dergestalt ausgebildet, dass das Fahrzeug noch einfach und ohne eine Beschädigung am Unterboden über die Schlauchbrücke 1 fahren kann. Im Bereich der Schlauchbrücke 1 ist die Höhe des Schlauchs 16 reduziert.

### Zeichnungslegende

- 1.: Schlauchbrücke
- 2.: Oberteil
- 3.: Unterteil
- 4.: Platte von 2
- 5.: Platte von 3
- 6.: Verzahnung 6a, 6b
- 7.: Schlitz
- 8.: Zahn
- 9.: Verschiebesicherung
- 10.: Verriegelungsbolzen
- 11.: Kanal für 16
- 12.: Kante
- 13.: Querschnitt
- 14.: Auflagefläche unten für 16
- 15.: Auflagefläche oben für 16
- 16.: Schlauch
- 17.: Stirnende von 2
- 18.: Stirnende von 3
- 19,: Höhe von 16
- 20.: reduzierte Höhe von 16
- 21.: Keil
- 22.: Gurt
- 23.: Auflagefläche
- 24.: Überfahrfläche

## Patentansprüche

1. Schlauchbrücke (1) für einen Schlauch (11) oder ein Kabel, bestehend aus einem Oberteil (2) und einem Unterteil (3), welche lösbar miteinander verbindbar sind und zwischen sich einen Kanal (11) für den Schlauch (11) oder das Kabel ausbilden, **dadurch gekennzeichnet, dass** die Ober- und Unterteile (2, 3) der Schlauchbrücke (1) mit einer formschlüssigen Verbindung verbindbar sind, bei welcher gegenüberliegende Zähne (8, 8a, 8b) formschlüssig ineinandergreifen.

2. Schlauchbrücke (1) nach Anspruch 1, **dadurch gekennzeichnet, dass** das Oberteil (2) aus einer Platte (4) mit abstehenden Zähnen (8, 8a) besteht, welche jeweils in zwei beabstandeten Reihen angeordnet sind und zusammen mit der Platte (4) eine U-Form ausbilden und dass das Unterteil (3) aus einer Platte (5) mit abstehenden Zähnen (8, 8b) besteht, welche jeweils in zwei beabstandeten Reihen angeordnet sind und zusammen mit der Platte (5) eine U-Form ausbilden und dass die Zähne (8, 8a) des Oberteils (2) formschlüssig in die gegenüberliegenden Zähne (8, 8b) des Unterteils (4) eingreifen.

3. Schlauchbrücke (1) für einen Schlauch (11) oder ein Kabel, bestehend aus einem Oberteil (2) und einem Unterteil (3), welche lösbar miteinander verbindbar sind und zwischen sich einen Kanal (11) für den Schlauch (11) oder Kabel ausbilden, **dadurch gekennzeichnet, dass** die Ober- und Unterteile (2, 3) der Schlauchbrücke (1) mit einer formschlüssigen Verbindung verbindbar sind, bei welcher gegenüberliegende Zähne (8, 8a, 8b) und Schlitze (7, 7a, 7b) formschlüssig ineinandergreifen.

4. Schlauchbrücke nach Anspruch 3, **dadurch gekennzeichnet, dass** das Oberteil (2) aus einer Platte (4) mit abstehenden Zähnen (8, 8a) und Schlitzen (7, 7a) besteht, welche jeweils in zwei beabstandeten Reihen angeordnet sind und zusammen mit der Platte (4) eine U-Form ausbilden und dass das Unterteil (3) aus einer Platte (5) mit abstehenden Zähnen (8, 8b) und Schlitzen (7, 7b) besteht, welche jeweils in zwei beabstandeten Reihen angeordnet sind und zusammen mit der Platte (5) eine U-Form ausbilden und dass die Zähne (8, 8a) des Oberteils (2) formschlüssig in die gegenüberliegenden Schlitze (7, 7b) des Unterteils (4) und die Zähne (8, 8b) des Unterteils (4) formschlüssig in die gegenüberliegenden Schlitze (7, 7a) des Oberteils (4) eingreifen.

5. Schlauchbrücke nach einem der Ansprüche 1 bis 4, **dadurch gekennzeichnet, dass** das Oberteil (2) kürzer ausgebildet ist, als das Unterteil (3).

6. Schlauchbrücke nach einem der Ansprüche 1 bis 5, **dadurch gekennzeichnet, dass** die Schlauchbrücke (1) mindestens eine Verschiebesicherung (9) aufweist, welche ein Verschieben des Oberteils (2) gegenüber dem Unterteil verhindert.

7. Schlauchbrücke nach Anspruch 6, **dadurch gekennzeichnet, dass** die Verschiebesicherung (9) einen Verriegelungsbolzen (10) aufweist, welche zwischen zwei beabstandete Zähne (8, 8a, 8b) der gegenüberliegenden Platte (4, 5) eingreift.

8. Schlauchbrücke nach einem der Ansprüche 1 bis 5, **dadurch gekennzeichnet, dass** die Schlauchbrücke aus einem hochfesten Stahl besteht.

9. Schlauchbrücke nach einem der Ansprüche 1 bis 8, **dadurch gekennzeichnet, dass** der Kanal (11) eine geringere Höhe (20), als die Höhe (19) des druckbelasteten Schlauchs (16) aufweist.

10. Schlauchbrücke nach einem der Ansprüche 1 bis 9, **dadurch gekennzeichnet, dass** die Schlauchbrücke (1) als Überfahr- und Querungshilfe ausgebildet ist, welche einen Kanal (11) zur Aufnahme von (Feuerwehr-) Schläuchen oder Kabeln aufweist und dass die Schlauchbrücke (1) zwischen zwei beabstandeten Keilen (21) anordnenbar ist.

## Geänderte Patentansprüche

### Geänderte Patentansprüche gemäss Regel 137(2) EPÜ.

1. Schlauchbrücke (1) für einen Schlauch (11) oder ein Kabel, bestehend aus einem Oberteil (2) und einem Unterteil (3), welche lösbar miteinander verbindbar sind und zwischen sich einen Kanal (11) für den Schlauch (11) oder das Kabel ausbilden, wobei die Ober- und Unterteile (2, 3) der Schlauchbrücke (1) mit einer formschlüssigen Verbindung verbindbar sind, **dadurch gekennzeichnet, dass** die formschlüssige Verbindung als Verzahnung (6, 6a, 6b) ausgebildet ist, bei welcher gegenüberliegende Zähne (8, 8a, 8b) formschlüssig ineinandergreifen, wobei durch eine Bewegung des Ober- und/oder Unterteils (2, 3) in Längsrichtung der Schlauchbrücke (1) die formschlüssige Verbindung verbindbar und lösbar ist.

2. Schlauchbrücke (1) nach Anspruch 1, **dadurch gekennzeichnet, dass** das Oberteil (2) aus einer Platte (4) mit abstehenden Zähnen (8, 8a) besteht, welche jeweils in zwei beabstandeten Reihen angeordnet sind und zusammen mit der Platte (4) eine U-Form ausbilden und dass das Unterteil (3) aus einer Platte (5) mit abstehenden Zähnen (8, 8b) besteht, welche jeweils in zwei beabstandeten Reihen angeordnet sind und zusammen mit der Platte (5) eine U-Form ausbilden und dass die Zähne (8, 8a) des Oberteils (2) formschlüssig in die gegenüberliegenden Zähne (8, 8b) des Unterteils (4) eingreifen.

3. Schlauchbrücke (1) nach Anspruch 1 oder 2, **dadurch gekennzeichnet, dass** die Zähne (8, 8a, 8b) eine hakenförmige Form, eine L-Form, eine Keilform, eine Zinken-Form oder eine Fanghaken-Form aufweisen.

4. Schlauchbrücke (1) nach Anspruch 1 oder 2, **dadurch gekennzeichnet, dass** die Verzahnung (6, 6a, 6b) aus die Zähne (8, 8a, 8b) besteht, welche entlang der Längsachse der Platten (4, 5) der Ober- und Unterteile (2, 3) angeordnet sind, wobei die Zähne (8, 8a, 8b) hakenförmig ausgebildet sind und im zusammengesetzten Zustand des Ober- und Unterteils (4, 5) jeweils ein Zahn (8a) des Oberteils (2) in einen hierfür vorgesehenen, gegenüberliegenden Zahn (8b) des Unterteils (3) eingreift und ein Zahn (8b) des Unterteils (3) in den hierfür vorgesehenen, gegenüberliegenden Zahn (a) des Oberteils eingreift.

5. Schlauchbrücke (1) für einen Schlauch (11) oder ein Kabel, bestehend aus einem Oberteil (2) und einem Unterteil (3), welche lösbar miteinander verbindbar sind und zwischen sich einen Kanal (11) für den Schlauch (11) oder Kabel ausbilden, **wobei** die Ober- und Unterteile (2, 3) der Schlauchbrücke (1) mit einer formschlüssigen Verbindung verbindbar sind, **dadurch gekennzeichnet, dass** die formschlüssige Verbindung aus Zähnen (8, 8a, 8b) und Schlitzen (7, 7a, 7b) besteht, welche formschlüssig ineinandergreifen, wobei durch eine Bewegung des Ober- und/oder Unterteils (2, 3) in Längsrichtung der Schlauchbrücke (1) die formschlüssige Verbindung verbindbar und lösbar ist.

6. Schlauchbrücke nach Anspruch 5, **dadurch gekennzeichnet, dass** das Oberteil (2) aus einer Platte (4) mit abstehenden Zähnen (8, 8a) und Schlitzen (7, 7a) besteht, welche jeweils in zwei beabstandeten Reihen angeordnet sind und zusammen mit der Platte (4) eine U-Form ausbilden und dass das Unterteil (3) aus einer Platte (5) mit abstehenden Zähnen (8, 8b) und Schlitzen (7, 7b) besteht, welche jeweils in zwei beabstandeten Reihen angeordnet sind und zusammen mit der Platte (5) eine U-Form ausbilden und dass die Zähne (8, 8a) des Oberteils (2) formschlüssig in die gegenüberliegenden Schlitze (7, 7b) des Unterteils (4) und die Zähne (8, 8b) des Unterteils (4) formschlüssig in die gegenüberliegenden Schlitze (7, 7a) des Oberteils (4) eingreifen.

7. Schlauchbrücke nach Anspruch 5, **dadurch gekennzeichnet, dass** ein ersten Teil (Ober- oder Unterteil (2, 3)) aus einer Platte (4, 5) mit abstehenden Zähnen (8, 8a, 8b) besteht, welche jeweils in zwei beabstandete Reihen angeordnet sind und zusammen mit der Platte (4, 5) eine U-Form ausbilden und ein zweiter Teil (Ober- oder Unterteil (2, 3)) aus einer Platte (4, 5) mit Schlitzen besteht, welche jeweils in zwei beabstandeten Reihen angeordnet sind, wobei zur formschlüssigen Verbindung die Zähne des ersten Teils in die Schlitze des zweiten Teils eingreifen.

8. Schlauchbrücke nach einem der Ansprüche 1 bis 7, **dadurch gekennzeichnet, dass** das Oberteil (2) kürzer ausgebildet ist, als das Unterteil (3).

9. Schlauchbrücke nach einem der Ansprüche 1 bis 8, **dadurch gekennzeichnet, dass** die Schlauchbrücke (1) mindestens eine Verschiebesicherung (9) aufweist, welche ein Verschieben des Oberteils (2) gegenüber dem Unterteil verhindert.

10. Schlauchbrücke nach Anspruch 9, **dadurch gekennzeichnet, dass** die Verschiebesicherung (9) einen Verriegelungsbolzen (10) aufweist, welche zwischen zwei beabstandete Zähne (8, 8a, 8b) der gegenüberliegenden Platte (4, 5) eingreift.

11. Schlauchbrücke nach einem der Ansprüche 1 bis 10, **dadurch gekennzeichnet, dass** die Schlauchbrücke aus einem hochfesten Stahl besteht.

12. Schlauchbrücke nach einem der Ansprüche 1 bis 11, **dadurch gekennzeichnet, dass** der Kanal (11) eine geringere Höhe (20), als die Höhe (19) des druckbelasteten Schlauchs (16) aufweist.

13. Schlauchbrücke nach einem der Ansprüche 1 bis 12, **dadurch gekennzeichnet, dass** die Schlauchbrücke (1) als Überfahr- und Querungshilfe ausgebildet ist, welche einen Kanal (11) zur Aufnahme von (Feuerwehr-) Schläuchen oder Kabeln aufweist und dass die Schlauchbrücke (1) zwischen zwei beabstandeten Keilen (21) anordnenbar ist.
